# EUROPEAN PATENT APPLICATION

(11) **EP 3 179 272 A1**
(43) Date of publication of application: **14.06.2017**
(21) Application number: 16203146.2
(22) Date of filing: 09.12.2016
(51) Int. Cl.: G01S 17/42, G01S 17/48

(54) **LASER DEVICE**

(30) Priority: 10.12.2015 JP 2015241494
(71) Applicant: Funai Electric Co., Ltd., Daito Osaka 574-0013 (JP)
(72) Inventor: HIRAI, Tomohisa, Daito, Osaka 574-0013 (JP)
(74) Representative: Global IP Europe Patentanwaltskanzlei

(57) **Abstract**

A laser device is provided that comprises a light source, a first mirror, a second mirror, and a light receiver. The light source is configured to emit light. The first mirror is pivotable around a pivot axis. The first mirror is configured to reflect the light from the light source toward an object. The second mirror is arranged relative to the first mirror in an axial direction of the pivot axis and pivotable around the pivot axis. The second mirror is configured to reflect the light reflected by the object in a specific direction. The light receiver is configured to receive the light reflected by the second mirror. The light receiver is disposed at a position in the axial direction that is substantially the same as the light source.

## Description

### BACKGROUND

### Field of the Invention

The present invention generally relates to a laser device. More specifically, the present invention relates to a laser device for measuring the distance to an object.

### Background Information

There are known measurement devices for measuring the distance to an object (see JP 2009-109310 A, for example). With the measurement devices, a pivoting mirror is used to scan measurement light from a light source toward the object, and receive the return light reflected by the object with a light receiver via a mirror.

One such measurement device is known that includes a separated optical system. In the separate optical system, the optical axis of the light source is separated from the optical axis of the light receiver in a specific direction, and the measurement light and the return light go back and forth along different optical axes.

### SUMMARY

With the above-mentioned measurement device with a separated optical system, since the optical axis of the measurement light and the optical axis of the return light are separated, there may be situations in which parallax occurs, with which the optical axis of the return light is offset from the optical axis of the measurement light due to the distance from the object. When parallax occurs, there is the risk that measurement error will occur due to an offset in the angle at which the return light is incident on the light receiver.

One object is to provide a laser device with which the occurrence of parallax due to the distance from an object can be suppressed.
[1] In view of the state of the known technology and in accordance with a first aspect of the present invention, a laser device is provided that comprises a light source, a first mirror, a second mirror, and a light receiver. The light source is configured to emit light. The first mirror is pivotable around a pivot axis. The first mirror is configured to reflect the light from the light source toward an object. The second mirror is arranged relative to the first mirror in an axial direction of the pivot axis and pivotable around the pivot axis. The second mirror is configured to reflect the light reflected by the object in a specific direction. The light receiver is configured to receive the light reflected by the second mirror. The light receiver is disposed at a position in the axial direction that is substantially the same as the light source.
[2] In accordance with a preferred embodiment according to the laser device mentioned above, the laser device comprises a first light blocking member. The first light blocking member is disposed between a first optical path from the light source to the first mirror and a second optical path from the second mirror to the light receiver in the axial direction.
[3] In accordance with a preferred embodiment according to the laser device mentioned above, the first optical path and the second optical path at least partially overlap with each other as viewed in the axial direction.
   In accordance with a preferred embodiment according to any one of the laser devices mentioned above, the first optical path and the second optical path extend linearly.
[4] In accordance with a preferred embodiment according to any one of the laser devices mentioned above, the laser device comprises a deflection mirror configured to reflect the light from the light source toward the first mirror. The first optical path is bent at the deflection mirror.
   With this laser device, the first optical path from the light source to the first mirror is bent by the deflection mirror. Consequently, the light source can be disposed at a position that is offset to the side from the straight line connecting the first mirror and the light receiver. As a result, compared to when the first mirror, the light source, and the light receiver are disposed in a single straight line, the spacing between the first mirror and the light receiver (or the spacing between the first mirror and the light source) can be kept small, which affords a laser device that is more compact overall.
[5] In accordance with a preferred embodiment according to any one of the laser devices mentioned above, the laser device further comprises a third mirror and a second light blocking member. The third mirror is arranged relative to the first mirror in the axial direction on an opposite side from the second mirror and pivotable around the pivot axis. The third mirror is configured to reflect the light reflected by the object in the specific direction. The second light blocking member is disposed between the first optical path and a third optical path from the third mirror to the light receiver in the axial direction.
[6] In accordance with a preferred embodiment according to any one of the laser devices mentioned above, the first mirror, the second mirror, and the third mirror are substantially parallel to each other.
   With this laser device, the light from the object is reflected by two mirrors, namely, the second mirror and the third mirror. Consequently, the light reflected by the second mirror and by the third mirror is received by the light receiver. Thus, the amount of light received by the light receiver can be increased, and measurement accuracy can be improved.
[7] In accordance with a preferred embodiment according to any one of the laser devices mentioned above, the first mirror is angularly offset about the pivot axis relative to the second mirror and the third mirror.
[8] In accordance with a preferred embodiment according to any one of the laser devices mentioned above, the second mirror and the third mirror are substantially parallel to each other.
   With this laser device, the light from the object is reflected by two mirrors, namely, the second mirror and the third mirror. Consequently, the light reflected by the second mirror and by the third mirror is received by the light receiver. Thus, the amount of light received by the light receiver can be increased, and measurement accuracy can be improved. Furthermore, the first mirror is inclined around the pivot axis to the second mirror and to the third mirror. Thus, the light source can be disposed at a position that is offset to the side from the straight line connecting the first mirror and the light receiver. As a result, compared to when the first mirror, the light source, and the light receiver are disposed in a single straight line, the spacing between the first mirror and the light receiver (or the spacing between the first mirror and the light source) can be kept small, which affords a laser device that is more compact overall.
[9] In accordance with a preferred embodiment according to any one of the laser devices mentioned above, the first optical path, the second optical path and the third optical path at least partially overlap with each other as viewed in the axial direction.
   In accordance with a preferred embodiment according to any one of the laser devices mentioned above, the first optical path, the second optical path, and the third optical path extend linearly.
   With this laser device, the first mirror, the light source, and the light receiver can be disposed in a single straight line.
[10] In accordance with a preferred embodiment according to any one of the laser devices mentioned above, the laser device further comprises a first deflection mirror and a second deflection mirror. The first deflection mirror is configured to reflect the light reflected by the second mirror toward the light receiver. The second optical path is bent at the first deflection mirror. The second deflection mirror is configured to reflect the light reflected by the third mirror toward the light receiver. The third optical path is bent at the second deflection mirror.
   With this laser device, the second optical path from the second mirror to the light receiver is bent by the first deflection mirror, and the third optical path from the third mirror to the light receiver is bent by the second deflection mirror. Consequently, the light receiver can be disposed at a position that is offset to the side from the straight line connecting the first mirror and the light source. As a result, compared to when the first mirror, the light source, and the light receiver are disposed in a single straight line, the spacing between the first mirror and the light receiver (or the spacing between the first mirror and the light source) can be kept small, which affords a laser device that is more compact overall.
[11] In accordance with a preferred embodiment according to any one of the laser devices mentioned above, the laser device further comprises a third light blocking member extending between the first light blocking member and the second light blocking member, and disposed between the light source and the light receiver.
[12] In accordance with a preferred embodiment according to any one of the laser devices mentioned above, the laser device further comprises an optical part. The optical part is configured to guide the light reflected by the second mirror onto the light receiver.
[13] In accordance with a preferred embodiment according to any one of the laser devices mentioned above, the optical part includes a converging lens.
[14] In accordance with a preferred embodiment according to any one of the laser devices mentioned above, the light source, the optical part, and the light receiver have center optical axes that substantially coincide with respect to each other.
   With this laser device, the light source, the converging lens, and the light receiver are disposed at positions where the optical axes substantially coincide. Thus, the optical axis of the light reflected by the first mirror toward the object will be coaxial with the optical axis of the light from the object that is incident on the second mirror. As a result, parallax due to the distance of the object can be suppressed.
[15] In accordance with a preferred embodiment according to any one of the laser devices mentioned above, a focal position of the light guided by the optical part is disposed on or near an imaginary line extending along a center optical axis of the light source.
   With this laser device, the focal position of the light guided by the optical part is disposed on (or near) an extension of the optical axis of the light source. Thus, the optical axis of light reflected by the first mirror toward the object can be made coaxial (or substantially coaxial) with the optical axis of the light from the object that is incident on the second mirror. Consequently, parallax due to the distance from the object is less likely to occur. As a result, offset in the angle at which the light is incident on the light receiver due to the distance from the object is suppressed. Thus, measurement error is less likely to occur.
[16] In accordance with a preferred embodiment according to any one of the laser devices mentioned above, the laser device further comprises a frame extending along the pivot axis, and supporting the first mirror and the second mirror.
[17] In accordance with a preferred embodiment according to any one of the laser devices mentioned above, the frame extends through a hole of the first light blocking member.
[18] In accordance with a preferred embodiment according to any one of the laser devices mentioned above, the laser device further comprises a frame extending along the pivot axis, and supporting the first mirror, the second mirror and the third mirror.
[19] In accordance with a preferred embodiment according to any one of the laser devices mentioned above, the frame extends through a hole of the first light blocking member and a hole of the second light blocking member.
[20] In accordance with a preferred embodiment according to any one of the laser devices mentioned above, the optical part is entirely offset relative to a center optical axis of the light receiver.

### BRIEF DESCRIPTION OF THE DRAWINGS

Referring now to the attached drawings which form a part of this original disclosure:
FIG. 1 is a perspective view of the configuration of a measurement device in accordance with a first embodiment;
FIG. 2 is a top plan view of the configuration of the measurement device in accordance with the first embodiment;
FIG. 3 is a side elevational view of the configuration of the measurement device in accordance with the first embodiment;
FIG. 4 is a partial cross sectional view of the measurement device, taken along IV-IV line in FIG. 3;
FIG. 5 is a block diagram of the functional configuration of the measurement device in accordance with the first embodiment;
FIG. 6 is a schematic diagram of the configuration of a measurement device in accordance with a comparative example 1;
FIG. 7 is a diagram of the configuration of a measurement device in accordance with a comparative example 2;
FIG. 8 is a diagram of the configuration of a measurement device in accordance with a comparative example 3;
FIG. 9 is a perspective view of the configuration of a measurement device in accordance with a second embodiment;
FIG. 10 is a top plan view of the configuration of the measurement device in accordance with the second embodiment;
FIG. 11 is a perspective view of the configuration of a measurement device in accordance with a third embodiment;
FIG. 12 is a top plan view of the configuration of the measurement device in accordance with the third embodiment;
FIG. 13 is a top plan view of the configuration of a measurement device in accordance with a fourth embodiment;
FIG. 14 is a side elevational view of the configuration of the measurement device in accordance with the fourth embodiment;
FIG. 15 is a top plan view of the configuration of a measurement device in accordance with a fifth embodiment; and
FIG. 16 is a side elevational view of the configuration of the measurement device in accordance with the fifth embodiment.

### DETAILED DESCRIPTION OF EMBODIMENTS

Selected embodiments of the present invention will now be described through reference to the drawings. The embodiments described below are all just inclusive or specific examples. The numerical values, shapes, materials, constituent elements, layout positions and connection modes of the constituent elements, and so forth that are given in the following embodiments are merely examples, and are not intended to limit the present invention. Of the constituent elements in the following embodiments, those that are no mentioned in an independent claim will be described as optional constituent elements. The drawings do not necessarily strictly depict the various dimensions, dimensional ratios, and the like.

### FIRST EMBODIMENT

### 1-1. Overall Configuration of Measurement Device

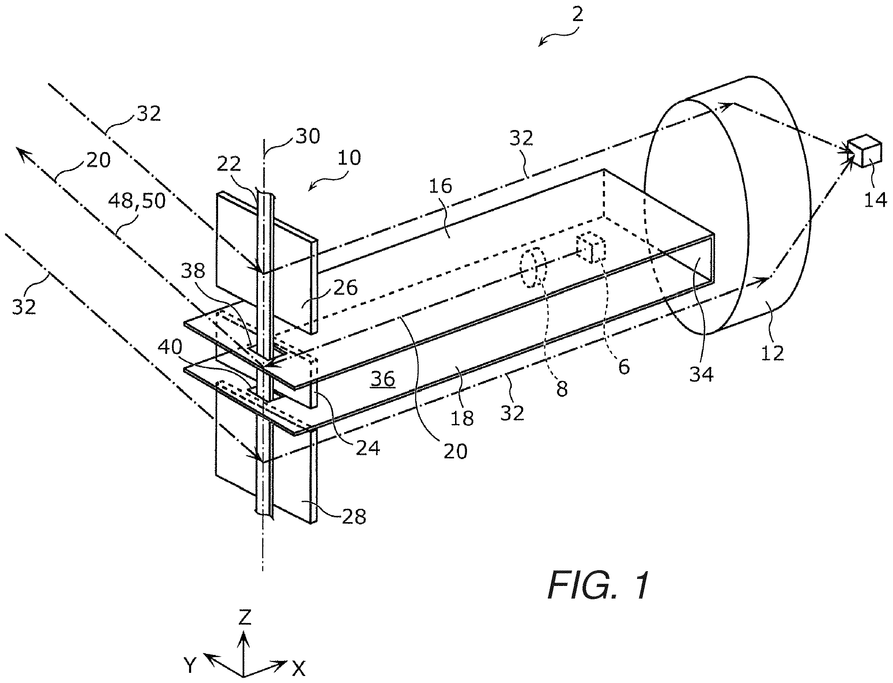

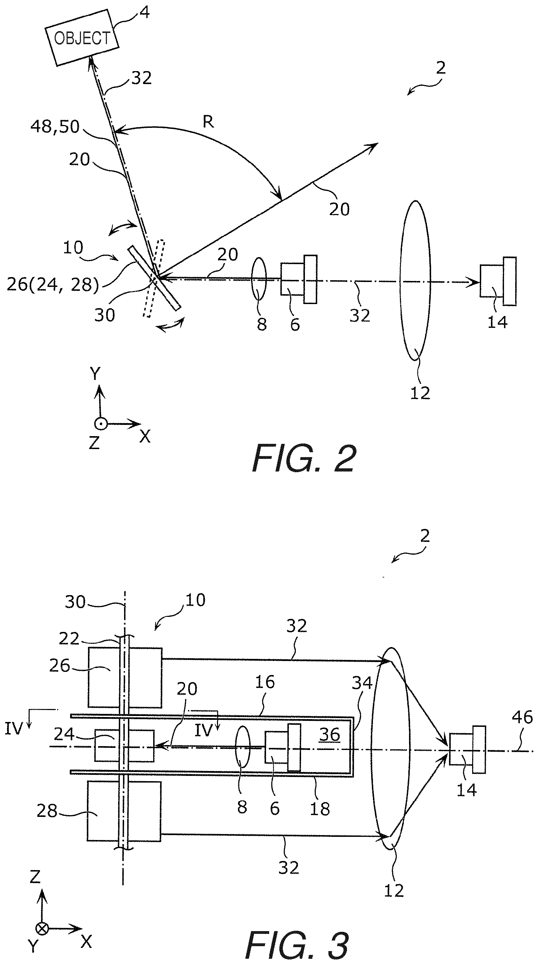

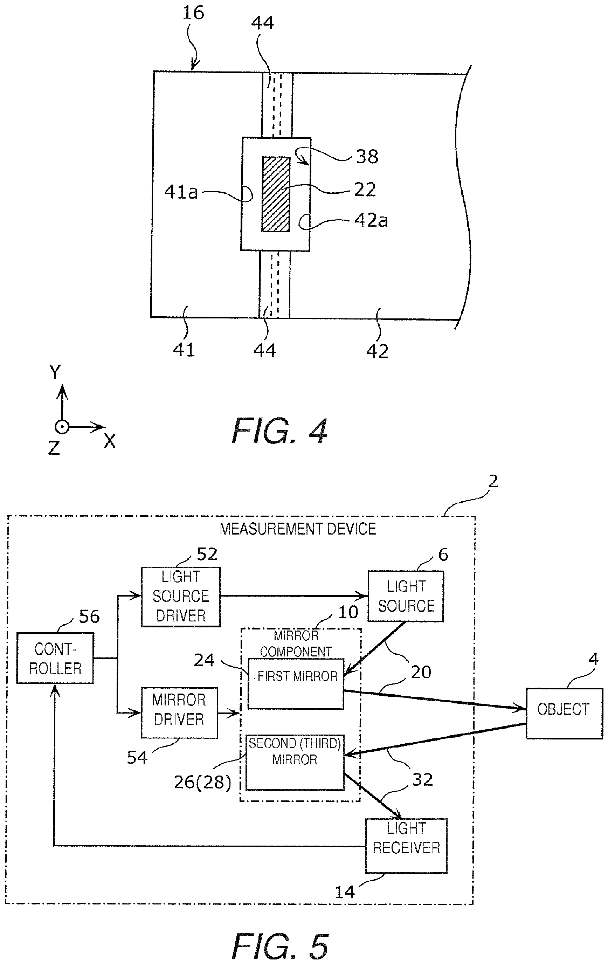

First, the overall configuration of a measurement device 2 (e.g., a laser device) in accordance with a first embodiment will be described through reference to FIGS. 1 to 4. FIG. 1 is a perspective view of the configuration of the measurement device 2 in accordance with the first embodiment. FIG. 2 is a top plan view of the configuration of the measurement device 2 in accordance with the first embodiment. FIG. 3 is a side elevational view of the configuration of the measurement device 2 in accordance with the first embodiment. FIG. 4 is a partial cross sectional view of the measurement device 2, taken along IV-IV line in FIG. 3. For the sake of convenience in description, a first light blocking plate 16 (e.g., a first light blocking member) and a second light blocking plate 18 (e.g., a second light blocking member) are not shown in FIG. 2.

As shown in FIGS. 1 to 3, the measurement device 2 in accordance with the first embodiment is a laser range finder for measuring the distance from the measurement device 2 to an object 4, for example. More specifically, the measurement device 2 scans a laser beam (e.g., light) toward the object 4 and receives the laser beam reflected by the object 4 to measure the distance from the measurement device 2 to the object 4.

As shown in FIGS. 1 to 3, the measurement device 2 comprises a light source 6, a mirror component 10, and a light receiver 14. Also, in the illustrated embodiment, the measurement device 2 comprises a converging lens 12 (e.g., an optical part). Also, in the illustrated embodiment, the measurement device 2 comprises the first light blocking plate 16. Also, in the illustrated embodiment, the measurement device 2 comprises a collimating lens 8. Also, in the illustrated embodiment, the measurement device 2 comprises the second light blocking plate 18. The light source 6, the collimating lens 8, the mirror component 10, the converging lens 12, the light receiver 14, the first light blocking plate 16, and the second light blocking plate 18 are housed in the interior of a case (not shown). The configuration of the case are well known in the art, and thus the detailed description will be omitted for the sake of brevity. With this case, the measurement device 2 can be formed as a single and independent device.

The light source 6 includes a laser diode, for example. The light source 6 emits measurement light 20 (a laser beam or light). The light source 6 is disposed between the mirror component 10 and the converging lens 12 (in a direction parallel to the X axis, for example). Of course, the light source 6 can include a different type of light source suitable for measuring the distance, as needed and/or desired.

The collimating lens 8 is disposed between the light source 6 and a first mirror 24 (discussed below) of the mirror component 10 (in a direction parallel to the X axis, for example). The collimating lens 8 converts the measurement light 20 emitted by the light source 6 from scattered light into parallel light. An aperture (not shown) for restricting the beam diameter of the measurement light 20 from the collimating lens 8 may further be disposed between the collimating lens 8 and the first mirror 24.

The mirror component 10 has a frame 22 and three mirrors, namely, a first mirror 24, a second mirror 26, and a third mirror 28. The mirror component 10 is supported in the interior of the case so as to be pivotable around a pivot axis 30. The mirror component 10 is formed by MEMS (micro-electromechanical system) mirrors, for example. The pivot axis 30 is an imaginary axis that extends in the Z axis direction (e.g., the axial direction) through the first light blocking plate 16 and the second light blocking plate 18.

The frame 22 is formed from a thin (0.2 mm thick, for example) sheet of metal, for example. The frame 22 extends in a slender shape in the pivot axis 30 direction. The frame 22 pivotally supports the first mirror 24, the second mirror 26, and the third mirror 28.

The first mirror 24 is used to reflect the measurement light 20 from the collimating lens 8 (that is, the measurement light 20 from the light source 6) toward the object 4. The second mirror 26 and the third mirror 28 are used to reflect the return light 32 (laser beam) reflected by the object 4 toward the light receiver 14.

As shown in FIGS. 1 and 3, the first mirror 24, the second mirror 26, and the third mirror 28 are disposed so that they are separated in the pivot axis 30 direction. More specifically, the second mirror 26 is disposed separated from the first mirror 24 in the pivot axis 30 direction (that is, the positive direction of the Z axis). Meanwhile, the third mirror 28 is disposed separated from the first mirror 24 in the pivot axis 30 direction and on the opposite side from the second mirror 26 (that is, the negative direction of the Z axis). In other words, the first mirror 24 is disposed between the second mirror 26 and the third mirror 28 along the pivot axis 30 (that is, Z axis). The first mirror 24, the second mirror 26, and the third mirror 28 are disposed substantially parallel to each other (that is, in the same plane). In other words, the surfaces of the first, second and third mirrors 24, 26 and 28 is disposed in the same plane. The first mirror 24, the second mirror 26, and the third mirror 28 pivot synchronously around the pivot axis 30 by means of a pivoting device or actuator (not shown).

The converging lens 12 is disposed between the mirror component 10 and the light receiver 14 (in a direction parallel to the X axis, for example). The converging lens 12 converges (or guides) the return light 32 reflected by the second mirror 26 and by the third mirror 28 on the light receiver 14. A bandpass filter (not shown) may further be disposed between the mirror component 10 and the converging lens 12. This bandpass filter removes noise light having a wavelength other than the wavelength of the measurement light 20, which is included in the return light 32 reflected by the second mirror 26 and the third mirror 28.

The light receiver 14 receives the return light 32 from the converging lens 12 (that is, the return light 32 reflected by the second mirror 26 and by the third mirror 28). The light receiver 14 generates a light reception signal (electrical signal) correspond to the intensity of the received return light 32. The light receiver 14 includes, for example, a photodiode, an avalanche photodiode, or the like.

As shown in FIGS. 1 and 3, the first light blocking plate 16 is disposed between the first mirror 24 and the second mirror 26 (in a direction parallel to the pivot axis 30, for example). The first light blocking plate 16 is formed from a material that is not translucent (a material that is opaque or fully opaque, for example). The second light blocking plate 18 is disposed between the first mirror 24 and the third mirror 28 (in a direction parallel to the pivot axis 30, for example). The second light blocking plate 18 is formed from a material that is not translucent (a material that is opaque or fully opaque, for example). The first light blocking plate 16 and the second light blocking plate 18 are each disposed substantially perpendicular to the pivot axis 30. The first light blocking plate 16 and the second light blocking plate 18 are disposed so as to be opposite each other, and extend from around the mirror component 10 to near the converging lens 12. A third light blocking plate 34 is disposed between the ends of the first light blocking plate 16 and the second light blocking plate 18 on the converging lens 12 side. The third light blocking plate 34 is formed from a material that is not translucent (a material that is opaque or fully opaque, for example). The third light blocking plate 34 extends between the ends of the first light blocking plate 16 and the second light blocking plate 18 to connect the first light blocking plate 16 and the second light blocking plate 18.

The light source 6 and the collimating lens 8 are disposed in a light transmission region 36. The light transmission region 36 is an interior region that is bounded by the first light blocking plate 16, the second light blocking plate 18, and the third light blocking plate 34. The first light blocking plate 16, the second light blocking plate 18, and the third light blocking plate 34 each have the function of blocking stray light produced in the light transmission region 36 from coming around into the converging lens 12 and the light receiver 14. The stray light is the portion of the measurement light 20 from the light source 6 that is scattered and reflected by the mirror component 10, etc.

As shown in FIG. 1, the first and second light blocking plates 16 and 18 include holes 38 and 40, respectively. The holes 38 and 40 have a rectangular shape. The frame 22 is rotatably inserted through the holes 38 and 40. Here, referring to FIG. 4, an example of the method for forming the hole 38 in the first light blocking plate 16 will be briefly explained. As shown in FIG. 4, the first light blocking plate 16 is formed by putting together a pair of split light blocking plates 41 and 42. Recesses 41 a and 42a are formed at the respective ends of the pair of split light blocking plates 41 and 42. In a state in which the pair of split light blocking plates 41 and 42 are brought close together so that these recesses 41 a and 42a are opposite each other, a light blocking tape 44 is affixed to the seam between the split light blocking plates 41 and 42. Consequently, the first light blocking plate 16 is formed by the pair of split light blocking plates 41 and 42, and the hole 38 is formed by the pair of recesses 41 a and 42a.

The characteristic configuration of the measurement device 2 in accordance with the first embodiment will now be described. As shown in FIG. 3, the light source 6, the first mirror 24, and the light receiver 14 are disposed in the same plane 46 that is substantially perpendicular to the pivot axis 30. Specifically, the light source 6, the first mirror 24, and the light receiver 14 are disposed at positions where the optical axis 48 of the measurement light 20 reflected by the first mirror 24 is coaxial with the optical axis 50 of the return light 32 incident on the second mirror 26 and the third mirror 28. This plane 46 is a virtual plane that is substantially parallel to the X-Y plane. Specifically, the optical axes of the light source 6, the collimating lens 8, the converging lens 12, and the light receiver 14 are disposed in the same plane 46 as the center of the reflective face of the first mirror 24. In other words, the focal position of the light converged (or guided) by the converging lens 12 is disposed at the light receiver 14 located on (or near) an extension of the optical axis of light from the light source 6 (including the measurement light 20 and the return light 32).

Also, as shown in FIG. 2, the optical path (e.g., the first optical path) of the measurement light 20 from the light source 6 to the first mirror 24, the optical path (e.g., the second optical path) of the return light 32 from the second mirror 26, the optical path (e.g., the third optical path) of the return light 32 from the third mirror 28 to the light receiver 14 extend linearly in a state of overlapping in the pivot axis 30 direction (overlapping as viewed in the pivot axis 30 direction as shown in FIG. 2). Specifically, the first mirror 24, the light source 6, the collimating lens 8, the converging lens 12, and the light receiver 14 are disposed on a single straight line.

With the above configuration, as shown in FIGS. 1 and 2, the optical axis 48 of the measurement light 20 reflected by the first mirror 24 is coaxial with the optical axis 50 of the return light 32 incident on the second mirror 26 and the third mirror 28.

### 1-2. Functional Configuration of Measurement Device

The functional configuration of the measurement device 2 will now be described through reference to FIG. 5. FIG. 5 is a block diagram of the functional configuration of the measurement device 2 in accordance with the first embodiment. In FIG. 5, the arrows with thin, solid lines show the flow of signals, while the arrows with thick, solid lines show the optical path of the laser beam.

As shown in FIG. 5, in addition to the light source 6, the mirror component 10, and the light receiver 14 mentioned above, the measurement device 2 also has a light source driver 52, a mirror driver 54, and a controller 56.

The light source driver 52 drives the light source 6. More specifically, the light source driver 52 causes the light source 6 to emit the measurement light 20 based on a laser emission control signal and a modulation signal from the controller 56.

The mirror driver 54 drives the mirror component 10 (the first mirror 24, the second mirror 26, and the third mirror 28). More specifically, the mirror driver 54 produces a drive current for driving the mirror component 10 based on a drive signal from the controller 56. The mirror driver 54 outputs the drive current thus produced to a pivoting device or actuator. Consequently, the first mirror 24, the second mirror 26, and the third mirror 28 pivot synchronously around the pivot axis 30 by means of the pivoting device.

The controller 56 is used to control the measurement device 2. The controller 56 includes a processor or circuit. Specifically, the controller 56 is formed, for example, by a system LSI (large scale integration) chip, an IC (integrated circuit), a microcontroller, or the like. The main functions of the controller 56 will now be described.

The controller 56 controls the light source driver 52 and the mirror driver 54. More specifically, the controller 56 outputs a laser emission control signal and a modulation signal to the light source driver 52. The controller 56 also outputs a drive signal to the mirror driver 54.

Furthermore, the controller 56 calculates the distance from the measurement device 2 to the object 4 based on the phase difference between the measurement light 20 emitted from the light source 6 and the return light 32 received by the light receiver 14. More specifically, the controller 56 calculates the above-mentioned phase difference based on a light reception signal produced by the light receiver 14 and a modulation signal outputted to the light source driver 52. After this, the controller 56 uses the calculated phase difference to calculate how long it takes for the light receiver 14 to receive the return light 32 after the measurement light 20 is emitted by the light source 6. After this, the controller 56 multiplies the speed of light by one-half the calculated time to calculate the distance from the measurement device 2 to the object 4. Of course, the measurement method for measuring the distance from the measurement device 2 to the object 4 is well known in the art, and is not limited to the method described above.

### 1-3. Operation of Measurement Device

The operation of the measurement device 2 in accordance with the first embodiment will now be described through reference to FIGS. 1 and 2.

As shown in FIGS. 1 and 2, the measurement light 20 from the light source 6 is incident on the first mirror 24 via the collimating lens 8, and is reflected by the first mirror 24. At this point, when the first mirror 24 pivots around the pivot axis 30, the measurement light 20 reflected by the first mirror 24 is scanned over a specific scanning range R from inside the case toward the object 4, which is located outside the case.

As shown in FIGS. 1 and 2, the return light 32 reflected by the object 4 is incident on the second mirror 26 and on the third mirror 28 inside the case from outside the case, and is reflected by the second mirror 26 and by the third mirror 28. At this point the second mirror 26 and the third mirror 28 pivot around the pivot axis 30, which causes the return light 32 reflected by the second mirror 26 and by the third mirror 28 to go through the converging lens 12 and be received by the light receiver 14.

As discussed above, the optical axis 48 of the measurement light 20 reflected by the first mirror 24 is coaxial with the optical axis 50 of the return light 32 incident on the second mirror 26 and on the third mirror 28.

### 1-4. Effect

The effect obtained with the measurement device 2 in accordance with the first embodiment will now be described based on a contrast with comparative examples 1 to 3.

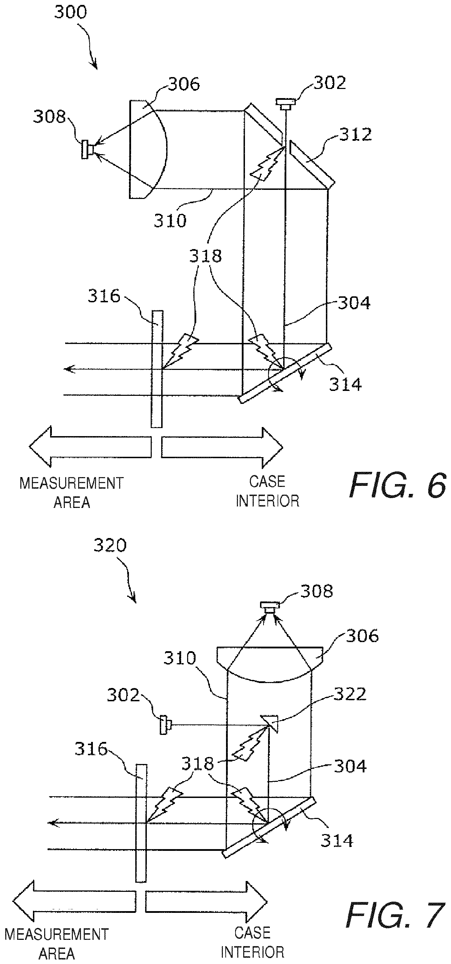

FIG. 6 is a diagram of the configuration of the measurement device 300 in accordance with the comparative example 1. As shown in FIG. 6, the measurement device 300 in accordance with the comparative example 1 is an example of a measurement device of a coaxial optical system. With this measurement device 300 of a coaxial optical system, the optical axis of measurement light 304 emitted from a light source 302 and the optical axis of return light 310 converged on a light receiver 308 by a converging lens 306 become the same optical axis at a holed mirror 312. Consequently, the measurement light 304 emitted from the light source 302 and the return light 310 received by the light receiver 308 go back and forth along the same optical axis. Furthermore, the measurement light 304 from the light source 302 is scanned by a mirror 314, and is emitted from a case window 316 into a measurement area (an area on the outside of the case). With the measurement device 300 in accordance with this comparative example 1, there is the risk that stray light 318 generated on the inner faces of the holed mirror 312, the mirror 314, and the case window 316 will be received by the light receiver 308. This results in a drop in the S/N ratio (signal-to-noise ratio) at the light receiver 308.

FIG. 7 is a diagram of the configuration of the measurement device 320 in accordance with the comparative example 2. As shown in FIG. 7, the measurement device 320 in accordance with the comparative example 2 is an example of a measurement device of a coaxial optical system. With this measurement device 320 of a coaxial optical system, the optical axis of the measurement light 304 emitted from the light source 302 and the optical axis of the return light 310 converged on the light receiver 308 by the converging lens 306 become the same optical axis at a mirror 322. Consequently, the measurement light 304 emitted from the light source 302 and the return light 310 received by the light receiver 308 go back and forth along the same optical axis. Furthermore, the measurement light 304 from the light source 302 is scanned by the mirror 314, and is emitted from the case window 316 into the measurement area. With the measurement device 320 in accordance with this comparative example 2, there is the risk that the stray light 318 generated on the inner faces of the mirror 322, the mirror 314, and the case window 316 will be received by the light receiver 308. This results in a drop in the S/N ratio at the light receiver 308.

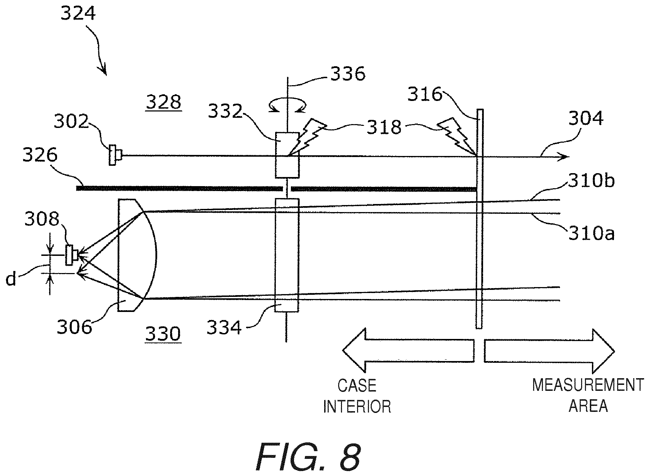

FIG. 8 is a diagram of the configuration of the measurement device 324 in accordance with the comparative example 3. As shown in FIG. 8, the measurement device 324 in accordance with the comparative example 3 is an example of a measurement device of a separated optical system. With this measurement device 324 of a separated optical system, the interior of the case is divided up by a light blocking plate 326 into a light transmission region 328 and a light reception region 330. A light transmission mirror 332 is disposed separated from a light reception mirror 334 in the pivot axis 336 direction. The light blocking plate 326 is disposed between the light transmission mirror 332 and the light reception mirror 334.

In the light transmission region 328, the measurement light 304 emitted from the light source 302 is scanned by the light transmission mirror 332, and is emitted from the case window 316 into the measurement area. In the light reception region 330, return light 310a and 310b incident from the case window 316 is reflected by the light reception mirror 334 toward the light receiver 308. Then, the return light 310a and 310b goes through the converging lens 306 and is received by the light receiver 308. In the illustrated example, the return light 310a is return light from an object disposed far from the measurement device 324, while the return light 310b is return light from an object disposed near the measurement device 324.

With the measurement device 324 in accordance with this comparative example 3, the light transmission region 328 and the light reception region 330 are divided by the light blocking plate 326. Thus, the stray light 318 generated in the light transmission region 328 is less likely to go around and into the light reception region 330. Therefore, with a measurement device of a separated optical system, the problems that occur with the measurement device for a coaxial optical system discussed above can be solved.

On the other hand, with the measurement device 324 in accordance with the comparative example 3, the optical axis of the light source 302 and the optical axis of the light receiver 308 are separated in the pivot axis 336 direction. Thus, there is the risk that parallax will occur due to the distance of the object. More specifically, as shown in FIG. 8, the convergence points of the return light 310a and 310b are shifted by a distance d by offsetting the optical axis of the return light 310b from an object at a near distance with respect to the optical axis of the return light 310a from an object at a far distance. Accordingly, when the converging lens 306 and the light receiver 308 are disposed to match the return light 310a from an object at a far distance, the angle at which the return light 310b from an object at a near distance is incident on the light receiver 308 is offset. This ends up causing measurement error.

In view of this, the measurement device 2 in accordance with the first embodiment is provided that solves the above-mentioned parallax problem. The measurement device 2 in accordance with the first embodiment has an advantage relative to the above-mentioned measurement device for a separated optical system. More specifically, as discussed above, the light source 6, the first mirror 24, and the light receiver 14 are disposed in the same plane 46, which is substantially perpendicular to the pivot axis 30. In other words, the focal position of the light converged by the converging lens 12 is disposed on an extension of the optical axis of light from the light source 6. Consequently, the optical axis 48 of the measurement light 20 reflected by the first mirror 24 is coaxial with the optical axis 50 of the return light 32 incident on the second mirror 26 and on the third mirror 28. Thus, it is less likely that parallax will occur due to the distance of the object 4. As a result, it is also less likely that the distance of the object 4 will cause offset of the angle at which the return light 32 is incident on the light receiver 14. Accordingly, the occurrence of measurement error can be suppressed.

The focal position of the light converged by the converging lens 12 can be disposed near an extension of the optical axis of light from the light source 6, that is, a position that is slightly offset from an extension of the optical axis in the Z axis direction, the Y axis direction, etc. Here again, the optical axis 48 of the measurement light 20 reflected by the first mirror 24 will be substantially coaxial with the optical axis 50 of the return light 32 incident on the second mirror 26 and on the third mirror 28. Thus, the same effect as discussed above can be obtained.

Furthermore, the first light blocking plate 16 is disposed between the first mirror 24 and the second mirror 26, and the second light blocking plate 18 is disposed between the first mirror 24 and the third mirror 28. Consequently, stray light produced at the first mirror 24 is prevented by the first light blocking plate 16 and the second light blocking plate 18 from going around to the light receiver 14. Thus, the S/N ratio can be raised at the light receiver 14.

The return light 32 from the object 4 is reflected by two mirrors, namely, the second mirror 26 and the third mirror 28. Consequently, the return light 32 reflected by the second mirror 26 and by the third mirror 28 is received by the light receiver 14. Thus, more light can be received by the light receiver 14, and measurement accuracy can be enhanced.

In the illustrated embodiment, the measurement device 2 is provided that comprises the light source 6, the first mirror 24, the second mirror 26, and the light receiver 14. Also, in the illustrated embodiment, the measurement device 2 comprises the converging lens 12 (e.g., the optical part). Also, in the illustrated embodiment, the measurement device 2 comprises the first light blocking plate 16 (e.g., the first light blocking member). The light source 6 is configured to emit the measurement light 20 (e.g., the light.) The first mirror 24 is pivotable around the pivot axis 30. The first mirror 24 is configured to reflect the measurement light 20 from the light source 6 toward the object 4. The second mirror 26 is arranged relative to the first mirror 24 in the axial direction (or the direction along the Z axis) of the pivot axis 30 and pivotable around the pivot axis 30. The second mirror 26 is configured to reflect the return light 32 (e.g., the light) reflected by the object 4 in a specific direction. The light receiver 14 is configured to receive the return light 32 reflected by the second mirror 26. The light receiver 14 is disposed at a position in the axial direction that is substantially the same as the light source 6 (see FIG. 3). The converging lens 20 is configured to converge or guide the return light 32 reflected by the second mirror 26 onto the light receiver 14. The first light blocking plate 16 is disposed between the first optical path (the measurement light 20) from the light source 6 to the first mirror 24 and the second optical path (the return light 32) from the second mirror 26 to the light receiver 14 in the axial direction.

In the illustrated embodiment, the first optical path (the measurement light 20) and the second optical path (the return light 32) at least partially overlap with each other as viewed in the axial direction.

In the illustrated embodiment, the first optical path (the measurement light 20) and the second optical path (the return light 32) extend linearly.

In the illustrated embodiment, the measurement device 2 further comprises the third mirror 28 and the second light blocking plate 18 (e.g., the second light blocking member). The third mirror 28 is arranged relative to the first mirror 24 in the axial direction on an opposite side from the second mirror 26 and pivotable around the pivot axis 30. The third mirror 28 is configured to reflect the return light 32 reflected by the object 4 in the specific direction. The second light blocking plate 18 is disposed between the first optical path (the measurement light 20) and the third optical path (the return light 32) from the third mirror 28 to the light receiver 14 in the axial direction.

In the illustrated embodiment, the first mirror 24, the second mirror 26, and the third mirror 28 are substantially parallel to each other.

In the illustrated embodiment, the first optical path (the measurement light 20), the second optical path (the return light 32) and the third optical path (the return light 32) at least partially overlap with each other as viewed in the axial direction.

In the illustrated embodiment, the first optical path (the measurement light 20), the second optical path (the return light 32) and the third optical path (the return light 32) extend linearly.

In the illustrated embodiment, the measurement device 2 further comprises the third light blocking plate 34 (e.g., the third light blocking member) extending between the first light blocking plate 16 and the second light blocking plate 18, and disposed between the light source 6 and the light receiver 14.

In the illustrated embodiment, the optical part includes the converging lens 12.

In the illustrated embodiment, the light source 6, the converging lens 12, and the light receiver 14 have the center optical axes that substantially coincide with respect to each other.

In the illustrated embodiment, the focal position of the return light 32 converged or guided by the converging lens 12 is disposed on (or near) the imaginary line extending along the center optical axis of the light source 6 (see FIGS, 2 and 3).

In the illustrated embodiment, the measurement device 2 further comprises the frame 22 extending along the pivot axis 30, and supporting the first mirror 24 and the second mirror 26.

In the illustrated embodiment, the frame 22 extends through the hole 38 of the first light blocking plate 16.

In the illustrated embodiment, the measurement device 2 further comprises the frame 22 extending along the pivot axis 30, and supporting the first mirror 24, the second mirror 26 and the third mirror 28.

In the illustrated embodiment, the frame 22 extends through the hole 38 of the first light blocking plate 16 and the hole 40 of the second light blocking plate 18.

### SECOND EMBODIMENT

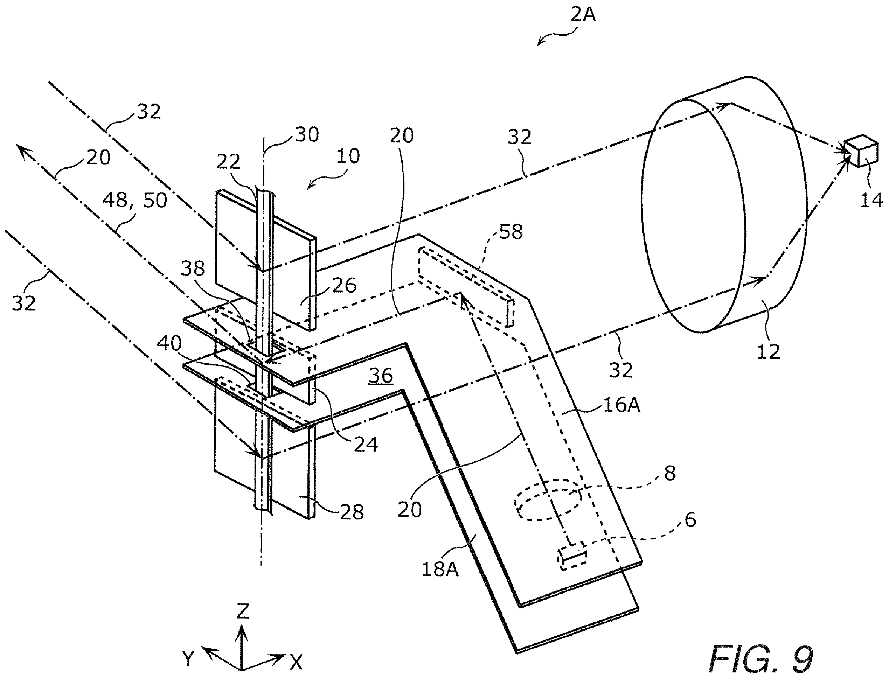

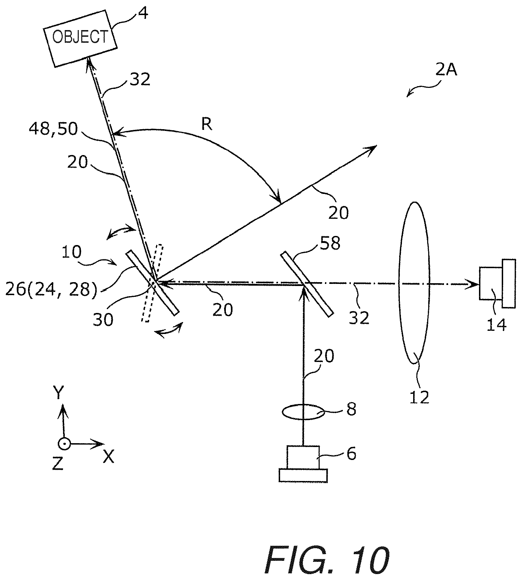

The configuration of a measurement device 2A in accordance with a second embodiment will now be described through reference to FIGS. 9 and 10. FIG. 9 is a perspective view of the configuration of the measurement device 2A in accordance with the second embodiment. FIG. 10 is a top plan view of the configuration of the measurement device 2A in accordance with the second embodiment. For the sake of convenience in the description, a first light blocking plate 16A and a second light blocking plate 18A are omitted in FIG. 10. In the embodiments given below, those constituent elements that are the same as in the first embodiment above will be numbered the same and will not be described again.

As shown in FIGS. 9 and 10, the measurement device 2A in accordance with the second embodiment and the measurement device 2 in accordance with the first embodiment above differ in the layouts of the light source 6 and the collimating lens 8 and in the configurations of the first light blocking plate 16A and the second light blocking plate 18A.

More specifically, as shown in FIGS. 9 and 10, the first mirror 24, the light source 6, the collimating lens 8, the converging lens 12, and the light receiver 14 are not disposed in a single straight line. Specifically, the light source 6 and the collimating lens 8 are disposed at positions that are offset to the side from a straight line connecting the first mirror 24 and the light receiver 14.

Also, as shown in FIGS. 9 and 10, a deflection mirror 58 is disposed in the light transmission region 36 between the mirror component 10 and the converging lens 12. The deflection mirror 58 is used to reflect the measurement light 20 from the light source 6 toward the first mirror 24. Consequently, the optical path of the measurement light 20 from the light source 6 to the first mirror 24 is bent by this deflection mirror 58.

As shown in FIG. 9, the first light blocking plate 16A and the second light blocking plate 18A are each disposed substantially perpendicular to the pivot axis 30. The the first light blocking plate 16A and the second light blocking plate 18A extend in a curve from the mirror component 10, through the deflection mirror 58, and to the light source 6.

Again with the measurement device 2A in accordance with the second embodiment, the light source 6, the first mirror 24, and the light receiver 14 are disposed in the same plane 46 (see FIG. 3) that is substantially perpendicular to the pivot axis 30. Thus, the same effect as in the first embodiment above can be obtained. Furthermore, the light source 6 and the collimating lens 8 are disposed at positions that are offset to the side from a straight line connecting the first mirror 24 and the light receiver 14. Thus, the spacing between the first mirror 24 and the light receiver 14 can be kept small, and the overall size of the measurement device 2A can be reduced.

In the illustrated embodiment, the measurement device 2A is provided that comprises the light source 6, the first mirror 24, the second mirror 26, and the light receiver 14. Also, in the illustrated embodiment, the measurement device 2A comprises the converging lens 12 (e.g., the optical part). Also, in the illustrated embodiment, the measurement device 2A comprises the first light blocking plate 16A (e.g., the first light blocking member). The light receiver 14 is disposed at a position in the axial direction (or the direction along the Z axis) that is substantially the same as the light source 6. The first light blocking plate 16A is disposed between the first optical path (the measurement light 20) from the light source 6 to the first mirror 24 and the second optical path (the return light 32) from the second mirror 26 to the light receiver 14 in the axial direction.

In the illustrated embodiment, the first optical path (the measurement light 20) and the second optical path (the return light 32) at least partially overlap with each other as viewed in the axial direction (see FIG. 10).

In the illustrated embodiment, the measurement device 2A comprises the deflection mirror 58 configured to reflect the measurement light 20 (e.g., the light) from the light source 6 toward the first mirror 24. The first optical path (the measurement light 20) is bent at the deflection mirror 58.

In the illustrated embodiment, the measurement device 2A further comprises the third mirror 28 and the second light blocking plate 18A (e.g., the second light blocking member). The second light blocking plate 18A is disposed between the first optical path (the measurement light 20) and the third optical path (the return light 32) from the third mirror 28 to the light receiver 14 in the axial direction.

In the illustrated embodiment, the first optical path (the measurement light 20), the second optical path (the return light 32) and the third optical path (the return light 32) at least partially overlap with each other as viewed in the axial direction (see FIG. 10).

### THIRD EMBODIMENT

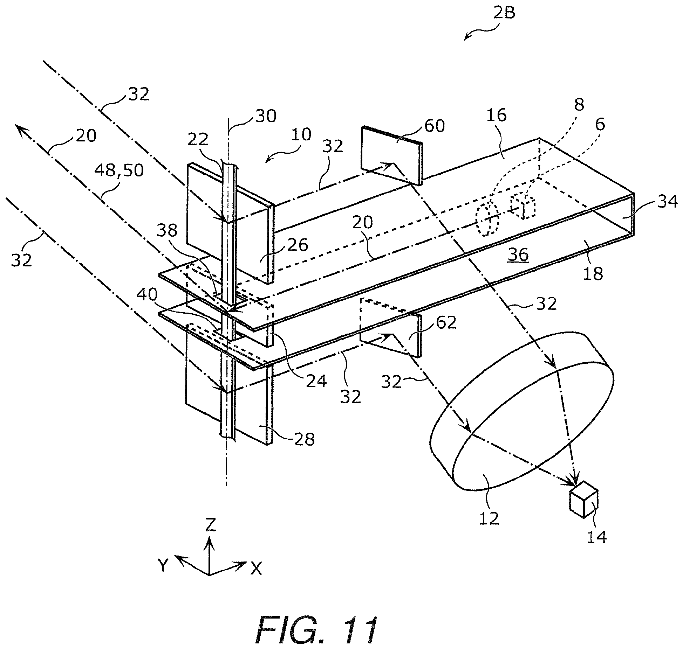

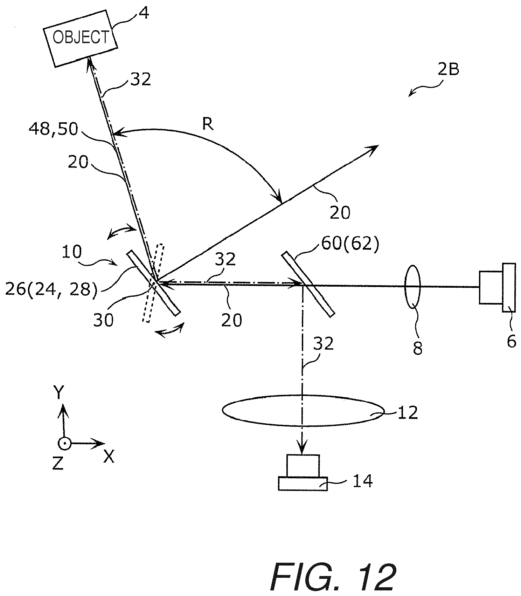

The configuration of a measurement device 2B in accordance with a third embodiment will now be described through reference to FIGS. 11 and 12. FIG. 11 is a perspective view of the configuration of the measurement device 2B in accordance with the third embodiment. FIG. 12 is a top plan view of the configuration of the measurement device 2B in accordance with the third embodiment. For the sake of convenience in the description, the first light blocking plate 16 and the second light blocking plate 18 are omitted in FIG. 12.

As shown in FIGS. 11 and 12, the measurement device 2B in accordance with the third embodiment and the measurement device 2 in accordance with the first embodiment above differ in the layouts of the light receiver 14 and the converging lens 12.

More specifically, as shown in FIGS. 11 and 12, the first mirror 24, the light source 6, the collimating lens 8, the converging lens 12, and the light receiver 14 are not disposed in a single straight line. Specifically, the converging lens 12 and the light receiver 14 are disposed at positions that are offset to the side from a straight line connecting the first mirror 24 and the light source 6.

Also, a first deflection mirror 60 is disposed at a position that is opposite both the second mirror 26 and the converging lens 12, while a second deflection mirror 62 is disposed at a position that is opposite both the third mirror 28 and the converging lens 12. The first deflection mirror 60 is used to reflect the return light 32 reflected by the second mirror 26 toward the light receiver 14. The second deflection mirror 62 is used to reflect the return light 32 reflected by the third mirror 28 toward the light receiver 14. The optical path of the return light 32 from the second mirror 26 to the light receiver 14 is bent by the first deflection mirror 60. Also, the optical path of the return light 32 from the third mirror 28 to the light receiver 14 is bent by the second deflection mirror 62.

Again with the measurement device 2B in accordance with the third embodiment, the light source 6, the first mirror 24, and the light receiver 14 are disposed in the same plane 46 (see FIG. 3) that is substantially perpendicular to the pivot axis 30. The same effect as in the first embodiment above can be obtained. Furthermore, the converging lens 12 and the light receiver 14 are disposed at positions that are offset to the side from a straight line connecting the first mirror 24 and the light source 6. The spacing between the first mirror 24 and the converging lens 12 can be kept small, and the overall size of the measurement device 2B can be reduced.

In the illustrated embodiment, the measurement device 2B is provided that comprises the light source 6, the first mirror 24, the second mirror 26, and the light receiver 14. Also, in the illustrated embodiment, the measurement device 2B comprises the converging lens 12 (e.g., the optical part). Also, in the illustrated embodiment, the measurement device 2B comprises the first light blocking plate 16 (e.g., the first light blocking member). The light receiver 14 is disposed at a position in the axial direction (or the direction along the Z axis) that is substantially the same as the light source 6. The first light blocking plate 16 is disposed between the first optical path (the measurement light 20) from the light source 6 to the first mirror 24 and the second optical path (the return light 32) from the second mirror 26 to the light receiver 14 in the axial direction.

In the illustrated embodiment, the first optical path (the measurement light 20) and the second optical path (the return light 32) at least partially overlap with each other as viewed in the axial direction (see FIG. 12).

In the illustrated embodiment, the measurement device 2B further comprises the third mirror 28 and the second light blocking plate 18 (e.g., the second light blocking member). The second light blocking plate 18 is disposed between the first optical path (the measurement light 20) and the third optical path (the return light 32) from the third mirror 28 to the light receiver 14 in the axial direction.

In the illustrated embodiment, the first optical path (the measurement light 20), the second optical path (the return light 32) and the third optical path (the return light 32) at least partially overlap with each other as viewed in the axial direction (see FIG. 12).

In the illustrated embodiment, the measurement device 2B further comprises the first deflection mirror 60 and the second deflection mirror 62. The first deflection mirror 60 is configured to reflect the return light 32 (e.g., the light) reflected by the second mirror 26 toward the light receiver 14. The second optical path (the return light 32) is bent at the first deflection mirror 60. The second deflection mirror 62 is configured to reflect the return light 32 (e.g., the light) reflected by the third mirror 28 toward the light receiver 14. The third optical path (the return light 32) is bent at the second deflection mirror 62.

### FOURTH EMBODIMENT

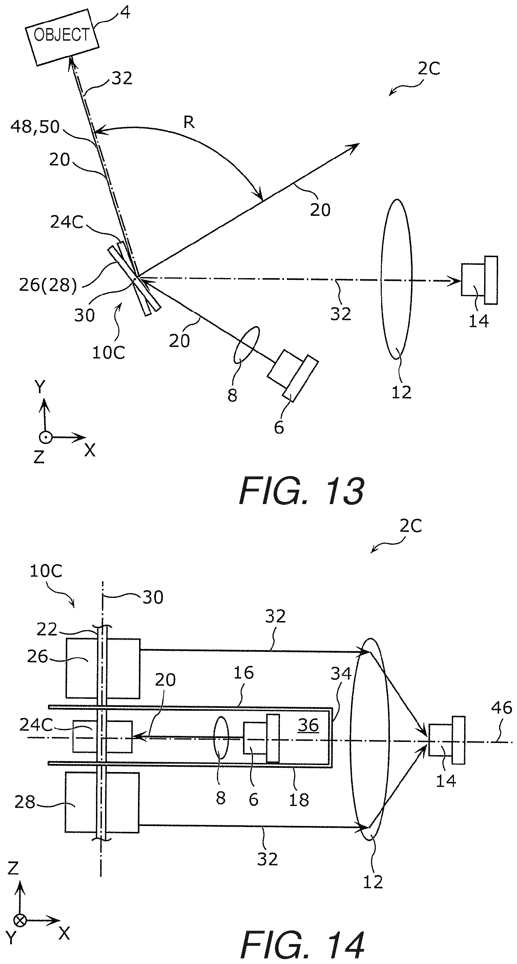

The configuration of a measurement device 2C in accordance with a fourth embodiment will now be described through reference to FIGS. 13 and 14. FIG. 13 is a top plan view of the configuration of the measurement device 2C in accordance with the fourth embodiment. FIG. 14 is a side elevational view of the configuration of the measurement device 2C in accordance with the fourth embodiment. For the sake of convenience in the description, the first light blocking plate 16 and the second light blocking plate 18 are omitted in FIG. 13.

As shown in FIGS. 13 and 14, the measurement device 2C in accordance with the fourth embodiment differs from the measurement device 2 in accordance with the first embodiment above in the configuration of a mirror component 10C and the layouts of the light source 6 and the collimating lens 8.

More specifically, as shown in FIG. 13, the second mirror 26 and the third mirror 28 are disposed substantially parallel to each other. A first mirror 24C is inclined by a specific angle around the pivot axis 30 to the second mirror 26 and to the third mirror 28. Because of this, the first mirror 24C, the light source 6, the collimating lens 8, the converging lens 12, and the light receiver 14 are not disposed in a single straight line. Specifically, the light source 6 and the collimating lens 8 are disposed at positions that are offset to the side from a straight line connecting the first mirror 24C and the light receiver 14.

Again with the measurement device 2C in accordance with the fourth embodiment, the light source 6, the first mirror 24C, and the light receiver 14 are disposed in the same plane 46 (see FIG. 14) that is substantially perpendicular to the pivot axis 30. Thus, the same effect as in the first embodiment above can be obtained. Furthermore, as discussed above, the light source 6 and the collimating lens 8 are disposed at positions that are offset to the side from a straight line connecting the first mirror 24C and the light receiver 14. Thus, the spacing between the first mirror 24C and the light receiver 14 can be kept small, and the overall size of the measurement device 2C can be reduced.

In the illustrated embodiment, the measurement device 2C is provided that comprises the light source 6, the first mirror 24C, the second mirror 26, and the light receiver 14. Also, in the illustrated embodiment, the measurement device 2C comprises the converging lens 12 (e.g., the optical part). Also, in the illustrated embodiment, the measurement device 2C comprises the first light blocking plate 16 (e.g., the first light blocking member). The first mirror 24C is pivotable around the pivot axis 30. The first mirror 24C is configured to reflect the measurement light 20 from the light source 6 toward the object 4. The second mirror 26 is arranged relative to the first mirror 24C in the axial direction (or the direction along the Z axis) of the pivot axis 30 and pivotable around the pivot axis 30. The second mirror 26 is configured to reflect the return light 32 (e.g., the light) reflected by the object 4 in a specific direction. The light receiver 14 is disposed at a position in the axial direction (or the direction along the Z axis) that is substantially the same as the light source 6 (see FIG. 14). The first light blocking plate 16 is disposed between the first optical path (the measurement light 20) from the light source 6 to the first mirror 24 and the second optical path (the return light 32) from the second mirror 26 to the light receiver 14 in the axial direction.

In the illustrated embodiment, the first optical path (the measurement light 20) and the second optical path (the return light 32) extend linearly.

In the illustrated embodiment, the measurement device 2C further comprises the third mirror 28 and the second light blocking plate 18 (e.g., the second light blocking member). The second light blocking plate 18 is disposed between the first optical path (the measurement light 20) and the third optical path (the return light 32) from the third mirror 28 to the light receiver 14 in the axial direction.

In the illustrated embodiment, the first mirror 24C is angularly offset about the pivot axis 30 relative to the second mirror 26 and the third mirror 28.

In the illustrated embodiment, the second mirror 26 and the third mirror 28 are substantially parallel to each other.

In the illustrated embodiment, the first optical path (the measurement light 20), the second optical path (the return light 32), and the third optical path (the return light 32) extend linearly.

In the illustrated embodiment, the measurement device 2C further comprises the third light blocking plate 34 (e.g., the third light blocking member) extending between the first light blocking plate 16 and the second light blocking plate 18, and disposed between the light source 6 and the light receiver 14 (see FIG. 14).

In the illustrated embodiment, the measurement device 2 further comprises the frame 22 extending along the pivot axis 30, and supporting the first mirror 24C and the second mirror 26.

In the illustrated embodiment, the measurement device 2 further comprises the frame 22 extending along the pivot axis 30, and supporting the first mirror 24C, the second mirror 26 and the third mirror 28.

### FIFTH EMBODIMENT

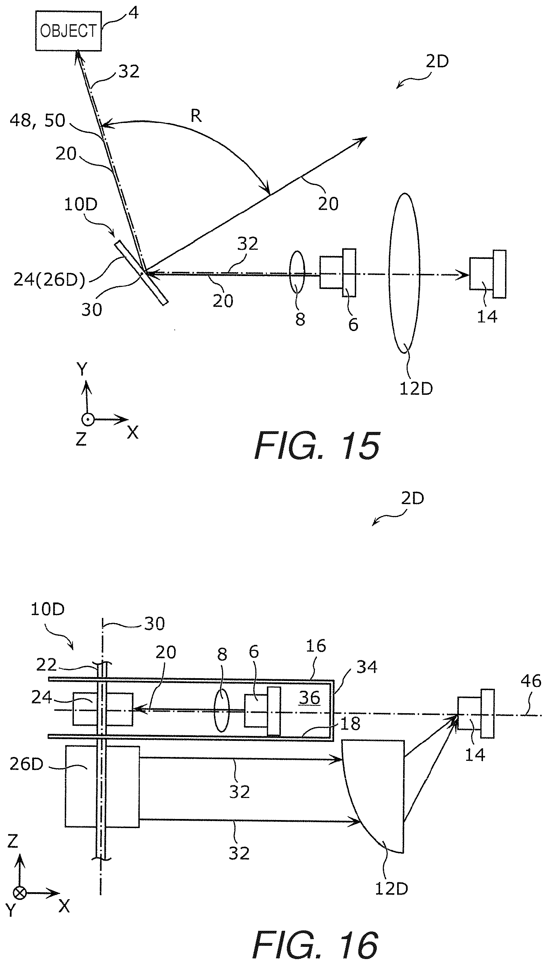

The configuration of a measurement device 2D in accordance with the fifth embodiment will now be described through reference to FIGS. 15 and 16. FIG. 15 is a top plan view of the configuration of the measurement device 2D in accordance with the fifth embodiment. FIG. 16 is a side elevational view of the configuration of the measurement device 2D in accordance with the fifth embodiment. For the sake of convenience in the description, the first light blocking plate 16 and the second light blocking plate 18 are omitted in FIG. 15.

As shown in FIGS. 15 and 16, the measurement device 2D in accordance with the fifth embodiment differs from the measurement device 2 in accordance with the first embodiment above in the configuration of a mirror component 10D and the configuration of a converging lens 12D.

More specifically, as shown in FIG. 16, the mirror component 10D has two mirrors, namely, the first mirror 24 and a second mirror 26D. The second mirror 26D is disposed separated from the first mirror 24 in the pivot axis 30 direction (that is, in the negative direction of the Z axis). Also, the converging lens 12D (e.g., an optical part) has a shape obtained by cutting out part of a plano-convex lens, for example. The converging lens 12D is disposed at a position opposite the second mirror 26D. The light source 6, the converging lens 12D, and the light receiver 14 are disposed at positions that substantially coincide with the respective optical axes.

Again with the measurement device 2D in accordance with the fifth embodiment, the light source 6, the first mirror 24, and the light receiver 14 are disposed in the same plane 46 (see FIG. 16) that is substantially perpendicular to the pivot axis 30. Thus, the same effect as in the first embodiment above can be obtained.

In the illustrated embodiment, the measurement device 2D is provided that comprises the light source 6, the first mirror 24, the second mirror 26D, and the light receiver 14. Also, in the illustrated embodiment, the measurement device 2D comprises the converging lens 12D (e.g., the optical part). Also, in the illustrated embodiment, the measurement device 2D comprises the second light blocking plate 18 (e.g., the first light blocking member). The first mirror 24 is pivotable around the pivot axis 30. The first mirror 24 is configured to reflect the measurement light 20 from the light source 6 toward the object 4. The second mirror 26D is arranged relative to the first mirror 24 in the axial direction (or the direction along the Z axis) of the pivot axis 30 and pivotable around the pivot axis 30. The second mirror 26D is configured to reflect the return light 32 (e.g., the light) reflected by the object 4 in a specific direction. The light receiver 14 is disposed at a position in the axial direction (or the direction along the Z axis) that is substantially the same as the light source 6 (see FIG. 16). The second light blocking plate 18 is disposed between the first optical path (the measurement light 20) from the light source 6 to the first mirror 24 and the second optical path (the return light 32) from the second mirror 26D to the light receiver 14 in the axial direction.

In the illustrated embodiment, the first optical path (the measurement light 20) and the second optical path (the return light 32) at least partially overlap with each other as viewed in the axial direction (see FIG. 15).

In the illustrated embodiment, the first optical path (the measurement light 20) and the second optical path (the return light 32) extend linearly (see FIG. 15).

In the illustrated embodiment, the focal position of the return light 32 converged by the converging lens 12D is disposed on (or near) the imaginary line extending along the center optical axis of the light source 6 (see FIG. 16).

In the illustrated embodiment, the measurement device 2D further comprises the frame 22 extending along the pivot axis 30, and supporting the first mirror 24 and the second mirror 26D.

In the illustrated embodiment, the converging lens 12D is entirely offset relative to the center optical axis of the light receiver 14 (see FIG. 16).

### Other Modification Examples

The measurement devices in accordance with the first to fifth embodiments of the present invention are described above, but the present invention is not limited to or by the first to fifth embodiments. For example, the first to fifth embodiments may be combined with one another.

The measurement device of the present invention can be applied as a laser range finder for measuring the distance to an object, for example.

In the illustrated embodiment, the measurement device in accordance with one mode comprises a light source that emits light, a first mirror that pivots around a pivot axis and thereby reflects light from the light source and scans it toward an object, a second mirror that is disposed in the pivot axis direction from the first mirror and pivots around the pivot axis and thereby reflects the light reflected by the object in a specific direction, a light receiver that receives light reflected by the second mirror, and an optical part that converges light reflected by the second mirror onto the light receiver. The focal position of the light converged by the optical part is disposed on or near an extension of the optical axis of light from the light source.

With this mode, because the focal position of the light converged by the optical part is disposed on (or near) an extension of the optical axis of light from the light source, the optical axis of light reflected by the first mirror toward the object is coaxial (or substantially coaxial) with the optical axis of light from the object that is incident on the second mirror. Consequently, parallax due to the distance from the object is less likely to occur. As a result, offset in the angle at which light is incident on the light receiver due to the distance from the object is suppressed, so measurement error is less likely to occur.

For example, with the measurement device in accordance with one mode, the measurement device can further comprise a third mirror that is disposed in the pivot axis direction from the first mirror and on the opposite side from the second mirror, and that pivots around the pivot axis and thereby reflects light reflected by the object in the specific direction. The first mirror, the second mirror, and the third mirror are disposed substantially parallel to each other.

With this mode, the light from the object is reflected by two mirrors, namely, the second mirror and the third mirror. Consequently, the light reflected by the second mirror and by the third mirror is received by the light receiver. Thus, the amount of light received by the light receiver can be increased, and measurement accuracy can be improved.

For example, with the measurement device in accordance with one mode, the optical path from the light source to the first mirror and the optical paths from the second mirror and the third mirror to the light receiver extend linearly in a state of overlapping in the pivot axis direction.

With this mode, the first mirror, the light source, and the light receiver can be disposed in a single straight line.

For example, with the measurement device in accordance with one mode, the measurement device can further comprise a deflection mirror that reflects light from the light source toward the first mirror. The optical path from the light source to the first mirror is bent by the deflection mirror.

With this mode, the optical path from the light source to the first mirror is bent by the deflection mirror. Consequently, the light source can be disposed at a position that is offset to the side from the straight line connecting the first mirror and the light receiver. As a result, compared to when the first mirror, the light source, and the light receiver are disposed in a single straight line, the spacing between the first mirror and the light receiver (or the spacing between the first mirror and the light source) can be kept small, which affords a measurement device that is more compact overall.

For example, with the measurement device in accordance with one mode, the measurement device can further comprise a first deflection mirror that reflects light reflected by the second mirror toward the light receiver, and a second deflection mirror that reflects light reflected by the third mirror toward the light receiver. The optical path from the second mirror to the light receiver is bent by the first deflection mirror, and the optical path from the third mirror to the light receiver is bent by the second deflection mirror.

With this mode, the optical path from the second mirror to the light receiver is bent by the first deflection mirror, and the optical path from the third mirror to the light receiver is bent by the second deflection mirror. Consequently, the light receiver can be disposed at a position that is offset to the side from the straight line connecting the first mirror and the light source. As a result, compared to when the first mirror, the light source, and the light receiver are disposed in a single straight line, the spacing between the first mirror and the light receiver (or the spacing between the first mirror and the light source) can be kept small, which affords a measurement device that is more compact overall.

For example, with the measurement device in accordance with one mode, the measurement device can further comprises a third mirror that is disposed in the pivot axis direction from the first mirror and on the opposite side from the second mirror, and that pivots around the pivot axis and thereby reflects light reflected by the object in a specific direction. The second mirror and the third mirror are disposed substantially parallel to each other, and the first mirror is inclined around the pivot axis to the second mirror and to the third mirror.

With this mode, the light from the object is reflected by two mirrors, namely, the second mirror and the third mirror. Consequently, the light reflected by the second mirror and by the third mirror is received by the light receiver. Thus, the amount of light received by the light receiver can be increased, and measurement accuracy can be improved. Furthermore, the first mirror is inclined around the pivot axis to the second mirror and to the third mirror. Thus, the light source can be disposed at a position that is offset to the side from the straight line connecting the first mirror and the light receiver. As a result, compared to when the first mirror, the light source, and the light receiver are disposed in a single straight line, the spacing between the first mirror and the light receiver (or the spacing between the first mirror and the light source) can be kept small, which affords a measurement device that is more compact overall.

For example, with the measurement device in accordance with one mode, the optical part can be a converging lens, and the light source, the converging lens, and the light receiver are disposed at positions where the optical axes thereof substantially coincide.

With this mode, the light source, the converging lens, and the light receiver are disposed at positions where the optical axes thereof substantially coincide. Thus, the optical axis of the light reflected by the first mirror toward the object will be coaxial with the optical axis of the light from the object that is incident on the second mirror. As a result, parallax due to the distance of the object can be suppressed.

For example, with the measurement device in accordance with one mode, the focal position of the light converged by the optical part can be disposed on an extension of the optical axis of the light from the light source.

With this mode, the focal position of the light converged by the optical part is disposed on an extension of the optical axis of the light from the light source. Thus, the optical axis of the light reflected by the first mirror toward the object can be made coaxial with the optical axis of light from the object that is incident on the second mirror.

With the measurement device in accordance with a mode of the present invention, parallax due to the distance of an object can be suppressed.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

Also it will be understood that although the terms "first" and "second" may be used herein to describe various components these components should not be limited by these terms. These terms are only used to distinguish one component from another. Thus, for example, a first component discussed above could be termed a second component and vice-a-versa without departing from the teachings of the present invention. Terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims.

## Claims

1. A laser device comprising:
a light source configured to emit light;
a first mirror pivotable around a pivot axis, the first mirror being configured to reflect the light from the light source toward an object;
a second mirror arranged relative to the first mirror in an axial direction of the pivot axis and pivotable around the pivot axis, the second mirror being configured to reflect the light reflected by the object in a specific direction; and
a light receiver configured to receive the light reflected by the second mirror, the light receiver being disposed at a position in the axial direction that is substantially the same as the light source.

2. A laser device according to claim 1, further comprising
a first light blocking member disposed between a first optical path from the light source to the first mirror and a second optical path from the second mirror to the light receiver in the axial direction.

3. The laser device according to claim 2, wherein
the first optical path and the second optical path at least partially overlap with each other as viewed in the axial direction.

4. The laser device according to claim 2 or 3, further comprising
a deflection mirror configured to reflect the light from the light source toward the first mirror, the first optical path being bent at the deflection mirror.

5. The laser device according to any one of claims 2 to 4, further comprising
a third mirror arranged relative to the first mirror in the axial direction on an opposite side from the second mirror and pivotable around the pivot axis, the third mirror being configured to reflect the light reflected by the object in the specific direction, and
a second light blocking member disposed between the first optical path and a third optical path from the third mirror to the light receiver in the axial direction.

6. The laser device according to claim 5, wherein
the first mirror, the second mirror, and the third mirror are substantially parallel to each other.

7. The laser device according to claim 5, wherein
the first mirror is angularly offset about the pivot axis relative to the second mirror and the third mirror.

8. The laser device according to claim 7, wherein
the second mirror and the third mirror are substantially parallel to each other.

9. The laser device according to any one of claims 5 to 8, wherein
the first optical path, the second optical path and the third optical path at least partially overlap with each other as viewed in the axial direction.

10. The laser device according to any one of claims 5 to 9, further comprising:
a first deflection mirror configured to reflect the light reflected by the second mirror toward the light receiver, the second optical path being bent at the first deflection mirror, and
a second deflection mirror configured to reflect the light reflected by the third mirror toward the light receiver, the third optical path being bent at the second deflection mirror.

11. The laser device according to any one of claims 5 to 10, further comprising
a third light blocking member extending between the first light blocking member and the second light blocking member, and disposed between the light source and the light receiver.

12. The laser device according to any one of claims 1 to 11, further comprising
an optical part configured to guide the light reflected by the second mirror onto the light receiver.

13. The laser device according to claim 12, wherein
the optical part includes a converging lens.

14. The laser device according to claim 12 or 13, wherein
the light source, the optical part, and the light receiver have center optical axes that substantially coincide with respect to each other.

15. The laser device according to any one of claims 12 to 14, wherein
a focal position of the light guided by the optical part is disposed on or near an imaginary line extending along a center optical axis of the light source.
